# EUROPEAN PATENT SPECIFICATION

(11) **EP 2 892 354 B1**
(45) Date of publication and mention of the grant of the patent: **14.09.2016**
(21) Application number: 13785634.0
(22) Date of filing: 28.08.2013
(51) Int. Cl.: A21C 15/00, A21D 13/00

(54) **A METHOD AND APPARATUS FOR THE CONTINUOUS PRODUCTION OF BREADSTICKS PARTIALLY COVERED BY A LAYER OF EDIBLE COATING**
VERFAHREN UND VORRICHTUNG ZUR KONTINUIERLICHEN HERSTELLUNG VON TEILWEISE MIT EINEM ESSBAREN ÜBERZUG BESCHICHTETEN BROTSTANGEN
PROCÉDÉ ET APPAREIL DESTINÉS À LA PRODUCTION CONTINUE DE GRESSINS PARTIELLEMENT RECOUVERTS D'UNE COUCHE D'ENROBAGE COMESTIBLE

(30) Priority: 03.09.2012 IT MI20121466
(43) Date of publication of application: 15.07.2015
(73) Proprietor: Valledoro S.p.A., 25136 Brescia (IT)
(72) Inventor: ZUBANI, Giulio, I-25136 Brescia (IT)
(74) Representative: Tansini, Elio Fabrizio
(86) International application number: PCT/IB2013/058052
(87) International publication number: WO 2014/033636

(56) References cited:
- US-A- 5 120 559
- US-A- 5 520 942
- US-A- 5 846 587
- US-A1- 2007 259 076

## Description

The subject of the present invention is a method for producing breadsticks partially covered by a layer of edible coating.

A subject of the present invention is also an apparatus for producing breadsticks partially covered by a layer of edible coating.

In the breadmaking products sector there is a growing demand for breadsticks covered with a layer of chocolate.

For this purpose the surface of the breadstick is required to be covered in chocolate after cooking has taken place, with the exception of an end stretch sufficiently large for the product to be easily held without dirtying the hands during consumption.

The solutions made available by the current state of the art require the use of machinery substantially suitable for dispersing chocolate in liquid form on a belt conveyor having a reticular structure, on which the oven products to be covered have previously been placed. The chocolate poured onto the belt conveyor falls through the latter's reticular structure and is conveyed to a collection basin from which it is recovered, to be redelivered to the belt, following suitable thermal treatment. The Applicant has observed that this equipment is suitable for creating a uniform coating of chocolate only on the upwards-exposed surface of the product being processed, but proves to be unsuitable for obtaining satisfactory coverage of the breadstick over its entire perimetral extension (in cross section), leaving only an end portion uncovered.

US-5,520,942A provides a method and an apparatus according to the preambles of claims 1 and 6, respectively. According to such a prior document, a breadstick or other baked goods are produced using supercritical fluid carbon dioxide as a solvent or carrier for an oil- or fat-soluble flavorant such as chocolate. The supercritical carbon dioxide replaces a substantial portion of a fat- or oil-based carrier or solvent for topical application of a heat sensitive or volatile ingredient to a baked product. The supercritical fluid and the volatile or heat sensitive ingredient may be sprayed onto the food product at low temperatures, prior to or after insertion of the product into a package.

The Applicant has therefore found that even with the aid of the known equipment, obtaining partial coverage of the breadsticks makes it necessary to resort to artisan methods which require a high use of manpower and high processing times, hardly compatible with large-scale production.

An object of the present invention is to improve the current state of the art.

More particularly, the present invention responds to the demand for production methods and equipment to make it possible to carry out continuous production on an industrial scale which is suitable also for satisfying the needs of large-scale distribution.

In other words, an object of the invention is to propose a method and an apparatus to make it possible to produce breadsticks partially covered in chocolate along a significant part of their longitudinal extension, leaving an end stretch of predetermined length uncovered, while maintaining high levels of productivity with a reduced use of manpower.

In this connection, the Applicant has foreseen the possibility of effectively achieving the desired coverage, by supporting the breadsticks in cantilever fashion at the end, which must remain free of covering, while the breadsticks themselves are moved through a film of molten chocolate falling from a dispenser.

More particularly, in accordance with a first aspect, an object of the present invention is a method for continuous production of breadsticks partially covered by a layer of edible coating, wherein said breadsticks are supported in a cantilever fashion, each at one grip end thereof, in a mutually parallel side-by-side relationship according to an orientation substantially horizontal and transversal with respect to a feed path along which are implemented the steps of:
strewing an edible substance in a fluid state on a portion of each breadstick extending from the grip end;
solidifying the edible substance strewn on each breadstick.

According to a further aspect, an object of the present invention is an apparatus for the continuous production of breadsticks partially covered by a layer of edible coating, comprising:
a linear conveyor suitable for engaging and supporting said breadsticks in a cantilever fashion, each at one grip end thereof, in a mutually parallel side-by-side relationship according to an orientation substantially horizontal and transversal with respect to a feed path;
application devices operating along the feed path for strewing an edible substance in a fluid state at a laterally offset position with respect to the linear conveyor, so as to strew said edible substance in the fluid state on a portion of each breadstick extending from the grip end;
devices for solidifying the edible substance strewn on each breadstick.

In one or more of the above aspects, the invention can comprise one or more of the following preferential characteristics.

Preferably, the edible substance is strewn forming a curtain of said edible substance in the fluid state, flowing by gravity across the feed path of the breadsticks.

Each breadstick is moved through the above curtain, so as to be uniformly covered with the edible substance in the fluid state for the whole of its longitudinal stretch, extending from the grip end.

To favour effective coating of the surface of the breadsticks which faces downwards, the following steps may also be implemented:
conveying edible substance in the fluid state coming from said curtain over an accumulation surface placed beneath with respect to the breadsticks translating along the feed path;
translating at least a lower portion of each breadstick through a layer of said edible substance in the fluid state accumulated on the accumulation surface. Preferably, the following steps are also implemented: conveying edible substance in the fluid state coming from said curtain into a collection basin placed beneath with respect to the feed path; picking up the edible substance in the fluid state from the collection basin; sending the edible substance in the fluid state to a dispenser to form said curtain.

This method ensures the immediate and constant reuse of the chocolate not applied to the breadsticks.

Preferably the edible substance in the fluid state, in particular chocolate, picked up from the collection basin is subjected to a thermal tempering treatment before being sent to the dispenser.

Carrying out continuous tempering on the chocolate (or other edible substance) picked up from the collection basin makes it possible to restore the optimal physical-chemical properties of the chocolate for the purposes of recoating, without requiring the provision and maintenance of stocks of tempered chocolate.

Preferably, during recoating the breadsticks are supported during recoating by mutually opposed thrust actions applied at the grip end of each breadstick. These opposed actions, preferably of elastic type, make it possible to hold the individual breadsticks without the risk of undesired breakages.

Preferably, before carrying out the solidification step, an air jet is directed against the breadsticks to remove an excess of edible substance in the fluid state.

This ensures optimal uniformity and regularity of the coating applied to the individual breadsticks.

Preferably, the application devices comprise a dispenser placed above the feed path to form a curtain of edible substance in the fluid state, flowing by gravity onto breadsticks translating across the feed path. Preferably, the application devices further comprise an accumulation surface arranged under the dispenser and beneath the breadsticks engaged by the linear conveyor, to form a layer of edible substance in the fluid state coming from the dispenser.

This accumulation surface is preferably distanced from the breadsticks by a measurement of less than 20 mm, preferably between 0 and 10 mm.

Preferably, the feeding devices further comprise a collection basin placed below the dispenser and on the feed path;
a possible thermal tempering unit;
a pump for circulating the edible substance in the fluid state from the collection basin to the dispenser, through the thermal tempering unit.

Preferably, the linear conveyor comprises a pair of mutually opposite belt conveyors, having feed branches arranged parallel in a mutually approached relationship to engage said breadsticks interposed between them, preferably in a biasing relationship.

This ensures an effective and secure grip of the breadsticks with the aid of constructionally simple and inexpensive equipment.

Preferably, the belt conveyors are coated in resiliently yieldable material, for example expanded polyurethane. This eliminates the risk of causing breakage of the breadsticks.

The use can also be specified of a loading unit comprising a load container suitable for housing a plurality of breadsticks and feeding devices for transferring the breadsticks individually from the loading container to the linear conveyor.

This facilitates feeding the breadsticks to the processing line, without requiring high expenditure of manpower.

The solidification of the edible substance can be achieved by cooling. For this purpose, the solidifying devices can comprise a cooling tunnel.

Further characteristics and advantages will appear more clearly from the detailed description of a preferred, but not exclusive, embodiment of a method and apparatus for producing breadsticks partially covered by a layer of edible coating, in accordance with the present invention.

This description will be explained below with reference to the attached drawings, provided solely for indicative and therefore non-limiting purposes, in which:
- figure 1 shows schematically in a side view an apparatus for producing breadsticks partially covered by a layer of edible coating, operating according to the present invention;
- figure 2 shows the apparatus of figure 1 seen from above;
- figure 3 shows schematically the application of the chocolate coating to a breadstick;
- figure 4 shows a blowing stage subsequent to that of figure 3;
- figure 5 shows a breadstick obtainable by means of the present invention.

With **reference to the mentioned drawings, an apparatus has been indicated by 1 for producing breadsticks partially covered by a layer of edible coating, according to the** present invention.

More particularly, the apparatus 1 is configured for applying a coating of chocolate 2 onto a plurality of breadsticks 3.

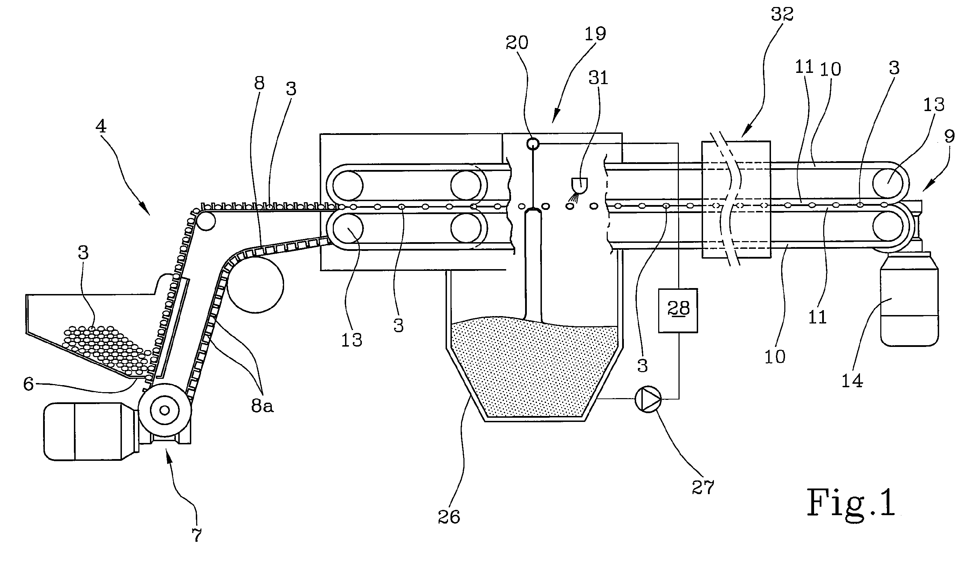

As may be seen from figure 1, the apparatus 1 comprises a loading unit 4, comprising a load container 5 suitable for housing a plurality of breadsticks 3.

The breadsticks 3 are introduced into the load container 5 in one or more production batches, for example coming from a previous stage of cooking.

The load container 5 can have walls converging towards a base zone 6 where the breadsticks 3, arranged parallel to each other, arrive at feeding devices 7 comprising for example at least one continuous belt feeder 8 equipped with grip elements 8a. the continuous feeder 8 is suitable for picking up the breadsticks 3 individually from the base zone 6, to transfer them to a linear conveyor 9.

The linear conveyor 9 is positioned laterally with respect to the breadsticks 3, so as to engage each of them individually at a grip end 3a thereof.

The linear conveyor 9 comprises preferably a pair of mutually opposed belt conveyors 10, having feed branches 11 arranged parallel in a mutually approached relationship, preferably in a vertical plane, to engage the breadsticks 3 interposed between them. Preferably the belt conveyors 10 each comprise a belt 12 wound round respective pulleys 13, of which at least one is operable by a motor 14. A coating 15 in expanded polyurethane or other resiliently yieldable material is applied to at least one of the belts 12. The sum of the thicknesses of the resiliently yieldable coatings 15 present along the feed branches 11 of the belts 12 is preferably equal to or greater than the diametral dimensions of the breadstick 3. Each breadstick 3 interposed between the feed branches 11 is therefore subjected to opposed biasing actions which favour the breadstick itself being held without the risk of breaking it.

At an intake end 16 of the linear conveyor 9, facing the loading unit 4, a pair of auxiliary feeders 17 may be arranged, configured for engaging each breadstick 3 at a distal end 3b thereof opposite to the grip end 3a.

The auxiliary feeders 17 are preferably matched with respect to the belt conveyors 10 and extend parallel to the latter for a short stretch. The auxiliary feeders 17 are suitable for holding and accompanying the breadsticks 3 during the engagement of the latter under the action of the linear conveyor 9, for example in the transient occurring between their disengagement from the loading unit 4 and their engagement with the linear conveyor itself. Correct engagement of the grip end 3a of the breadsticks 3 is therefore ensured under the action of the belt conveyors 10, inhibiting uncontrolled movement of the breadsticks 3 at the engagement stage. The auxiliary feeders 17 can take their drive directly from the belt conveyors 10, for example by means of at least one transmission spindle 18 extending from the respective pulleys 13.

It can be specified that the speed of operation of the linear conveyor 9 should be greater than the speed of the continuous feeder 8, so that the breadsticks 3 engaged on the linear conveyor 9 are suitably spaced apart from each other. It is therefore possible to keep to a minimum the speed of operation of the continuous feeder 8, to exclude the risk of breakage of the breadsticks 3 by the grip elements 8a.

Once the auxiliary feeders 17 have been abandoned, the breadsticks 3 moved by the linear conveyor 9 are firmly held in cantilever fashion, each at its grip end 3a, in a mutually parallel side-by-side relationship according to an orientation substantially horizontal and transversal with respect to a feed path "A" defined along the linear conveyor itself.

Along the feed path "A", application devices 19 operate, arranged to deliver an edible substance in a fluid state onto the breadsticks 3 which are travelling along the feed path "A".

In the case illustrated, the apparatus 1 is configured for coating the breadsticks 3 with chocolate, and reference will therefore be made to this substance in the course of the description which follows. However, the invention can also be exploited using an edible substance other than chocolate.

The application devices 19 comprise a dispenser 20 located above the feed path "A" to form a curtain 21 of chocolate, flowing by gravity across the feed path "A" and therefore onto the breadsticks 3 translating across the curtain 21.

The dispenser 20 can for example comprise a tubular element 22 extending, preferably in a horizontal direction, transversely to the feed path "A" in a position above the breadsticks 3.

The tubular element 22 is provided at the bottom with a longitudinal slot 23 from which the molten chocolate issues.

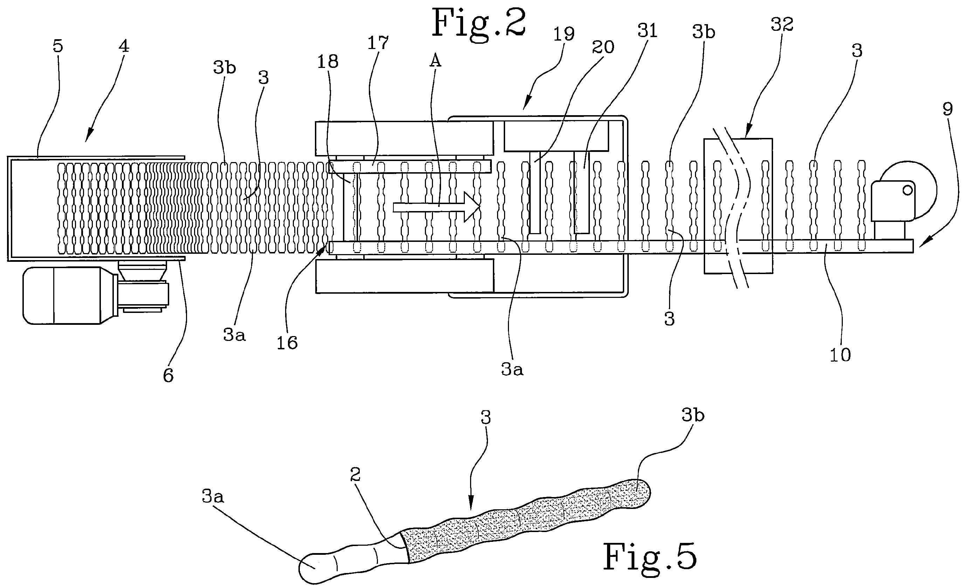

The tubular element 22 may also have associated with it a regulating organ 24 for the outgoing flow of chocolate. This regulating organ 24 comprises for example a tubular sleeve coaxially and rotatably engaged around the tubular element 22, and provided with a respective longitudinal restrictor slit 25. By rotating the regulating organ 24 around the tubular element 22 it is possible to restrict an outlet gap formed between respectively opposed edges of the longitudinal slot 23 and the restrictor slit 25, so as to regulate the flow of the chocolate dispensed, depending on requirements. As may be better seen from figure 2, dispensing occurs in a position laterally offset with respect to the linear conveyor 9, so that the chocolate is strewn over a portion of each breadstick 3 extending from the grip end 3a. Each breadstick 3 is therefore coated in chocolate over its entire length, with the exception of the grip end 3a which remains free of coating 2.

The excess liquid chocolate coming from the curtain 21 falls into a collection basin 26 placed below the dispenser 20 and on the feed path "A".

A circulating pump 27 picks up the liquid chocolate from the bottom of the collection basin 26 to send it once more to the dispenser 20. The collection basin 26 can be provided with thermostatic regulation devices (not illustrated), in order to keep a suitable reserve of chocolate in the fluid state.

A thermal tempering unit 28 is preferably interposed between the collection basin 26 and the dispenser 20, to subject the chocolate to a tempering treatment which, in a manner which is itself known, confers on the chocolate physical and chemical properties suitable for maintaining a compact and homogeneous molecular structure at the end of processing.

To favour an effective coating 15 of the lower surfaces of the breadsticks 3, an accumulation surface 29 can advantageously be arranged below the dispenser 20 and below the breadsticks 3 translating along the feed path "A".

The accumulation surface 29 can for example be formed by a transverse bar oriented parallel to the dispenser 20, forming substantially a horizontal plane.

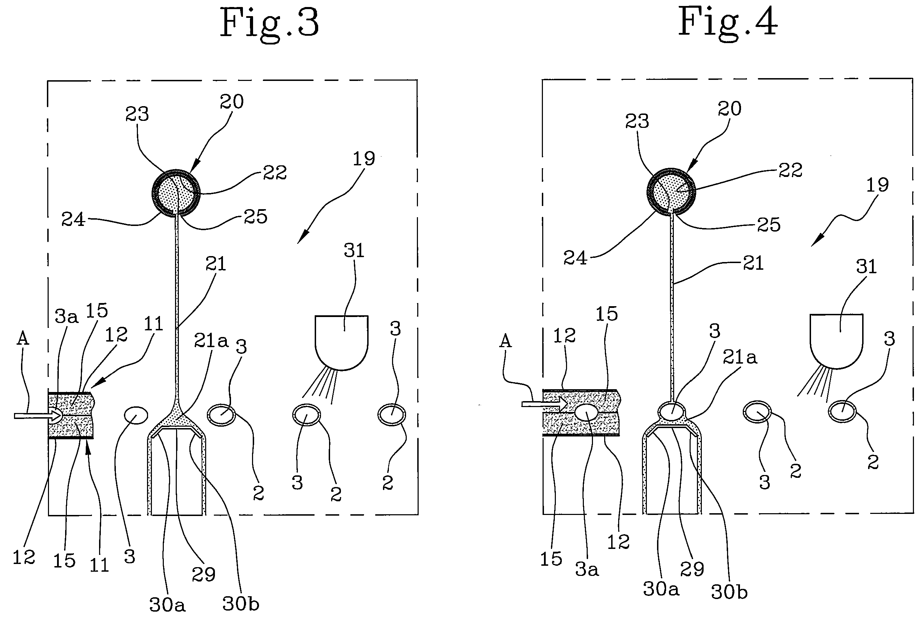

As is clearly visible from figures 3 and 4, the fluid chocolate coming from the curtain 21 falls onto the accumulation surface 29 and is therefore conveyed over it to form a fluid layer 21a.

The accumulation surface 29 is located at a distance indicatively less than 20 mm, preferably between 0 and 10 mm, from the lower surface of the breadsticks 3 which are translating along the feed path "A".

Consequently, a lower portion of each breadstick 3 which passes above the accumulation surface 29 is forced to translate across the fluid layer 21a formed on the accumulation surface 29.

Each breadstick 3 passing across the curtain 21 is therefore covered in chocolate including on its lower surface.

Preferably, the accumulation surface 29 is arranged consecutively to at least one inclined lead-in portion 30a. More particularly, a first lead-in portion 30a arranged upstream of the accumulation surface 29 has an ascending slope in the direction of translation of the breadsticks 3 along the feed path "A". The first lead-in surface is suitable for guiding and accompanying correctly towards the accumulation surface 29 those breadsticks 3 which, for whatever reason, have an orientation inclined downwards, starting from the grip end 3a.

A possible second inclined portion 30b can be provided downstream of the accumulation surface 29, according to a slope descending in the direction of feed of the breadsticks 3.

Downstream of the dispenser 20 at least one blowing nozzle 31 can advantageously be provided, directed towards the feed path "A", to direct an air jet against the breadsticks 3 which have crossed the curtain 21.

The air jet removes the excess fluid chocolate deposited on the surfaces of the breadsticks 3, so as to favour greater uniformity and regularity of the applied coating 2. The chocolate removed from the breadstick 3 falls into the collection basin 26.

Downstream of the application devices 19 and of the blowing nozzle 31 if fitted, the linear conveyor 9 takes the breadsticks 3 across solidification devices 32 for the substance which has been applied to them. In the example illustrated, these solidification devices 32 comprise a cooling tunnel inside which the chocolate applied in the fluid state to the breadsticks 3 is gradually cooled and solidified.

At the exit of the cooling tunnel 32, the breadsticks 3 can be sent to a packaging unit (not illustrated).

## Claims

1. A method for the continuous production of breadsticks partially covered by a layer of edible coating,
wherein said breadsticks (3) are supported in a mutually parallel side-by-side relationship according to an orientation substantially horizontal and transversal with respect to a feed path ("A"), along which are implemented the steps of:
strewing an edible substance in a fluid state on each breadstick (3);
solidifying the edible substance strewed on each breadstick (3),
**characterized in that** said breadsticks are supported in a cantilever fashion, each at one grip end (3a) thereof; and
said edible substance in a fluid state is strewed on a portion of each breadstick (3) extending from the grip end (3a).

2. A method according to claim 1, wherein the step of dispersing the edible substance comprises:
arranging a curtain (21) of said edible substance in the fluid state, flowing by gravity across the feed path ("A") of the breadsticks (3);
translating each breadstick (3) across said curtain (21).

3. A method according to claim 2, further comprising the steps of:
conveying said edible substance in the fluid state coming from said curtain (21) over an accumulation surface (29) placed beneath with respect to the breadsticks (3) translating along the feed path ("A");
translating at least a lower portion of each breadstick (3) through a layer (21a) of said edible substance in the fluid state accumulated on the accumulation surface (29).

4. A method according to one or more of the preceding claims, wherein the breadsticks (3) are supported by mutually opposed thrust actions applied in correspondence of the grip end (3a) of each breadstick (3).

5. A method according to one or more of the preceding claims, wherein an air jet is directed against said breadsticks (3) for removing an excess of edible substance in the fluid state before achieving said solidification step.

6. An apparatus for the continuous production of breadsticks partially covered by a layer of edible coating, comprising:
application devices (19) operating along a feed path ("A") for delivering an edible substance in a fluid state on said breadsticks (3);
**characterized in that** it further comprises:
a linear conveyor (9) suitable for engaging and supporting said breadsticks (3) in a cantilever fashion, each at one grip end (3a) thereof, in a mutually parallel side-by-side relationship according to an orientation substantially horizontal and transversal with respect to a feed path ("A");
wherein said application devices (19) operate at a laterally offset position with respect to the linear conveyor (9), so as to strew said edible substance in the fluid state on a portion of each breadstick (3) extending from the grip end (3a);
devices for solidifying (32) the edible substance strewed on each breadstick (3).

7. An apparatus according to claim 6, wherein the application devices (19) comprise a dispenser (20) placed above the feed path ("A") to form a curtain (21) of said edible substance in the fluid state, flowing by gravity on breadsticks (3) translating across the feed path ("A").

8. An apparatus according to claim 7, wherein the application devices (19) further comprise an accumulation surface (29) arranged under the dispenser (20) and beneath the breadsticks (3) engaged by the linear conveyor (9), to form a layer (21a) of an edible substance in the fluid state coming from the dispenser (20).

9. An apparatus according to one or more of claims 6 to 8, wherein the linear conveyor (9) comprises a pair of mutually opposite belt conveyors (10), having feed branches (11) parallelly arranged in a mutually approached relationship to engage said breadsticks (3) interposed between them.

10. An apparatus according to claim 9, wherein the belt conveyors (10) are covered by resiliently yieldable material (15).

11. An apparatus according to claim 8, wherein said accumulation surface (29) is arranged at a distance less than 20 mm beneath the breadsticks (3) engaged by the linear conveyor (9).

12. An apparatus according to one or more of claims 6 to 8, wherein the linear conveyor (9) comprises a pair of mutually opposite belt conveyors (10), having feed branches (11) parallelly arranged in a mutually approached relationship to engage in a biasing relationship said breadsticks (3) interposed between them.

## Patentansprüche

1. Verfahren zur kontinuierlichen Herstellung von teilweise mit einem essbaren Überzug beschichteten Brotstangen, wobei genannte Brotstangen (3) in einer einander parallelen Seite-an-Seite-Beziehung entsprechend einer im Wesentlichen horizontalen und transversalen Richtung in Bezug auf eine Beschickungsbahn ("A") getragen werden, entlang der die folgenden Schritte implementiert sind: Streuen einer essbaren Substanz in einem flüssigen Zustand auf jede Brotstange (3); Erstarren der auf jede Brotstange (3) gestreuten Substanz, **gekennzeichnet dadurch, dass** genannte Brotstangen auf freitragende Art und Weise getragen werden, jede an einem Greifende (3a) davon; und genannte essbare Substanz in einem flüssigen Zustand auf einen Abschnitt jeder Brotstange (3) sich vom Greifende (3a) erstreckend gestreut wird.

2. Verfahren nach Anspruch 1, wobei der Schritt des Zerstreuens der essbaren Substanz umfasst: Anordnen eines Vorhangs (21) der genannten essbaren Substanz im flüssigen Zustand, fließend durch Schwerkraft quer über die Beschickungsbahn ("A") der Brotstangen (3); Übertragen jeder Brotstange (3) durch genannten Vorhang (21).

3. Verfahren nach Anspruch 2, außerdem umfassend die Schritte: Fördern genannter von genanntem Vorhang (21) kommenden essbaren Substanz im flüssigen Zustand auf einer darunter platzierten Sammeloberfläche (29) in Bezug auf die entlang der Beschickungsbahn ("A") übertragenen Brotstangen (3); Übertragen mindestens eines unteren Abschnitts jeder Brotstange (3) durch eine Schicht (21a) der genannten essbaren Substanz im flüssigen Zustand, die sich auf der Sammeloberfläche (29) angesammelt hat.

4. Verfahren nach einem oder mehreren der vorhergehenden Ansprüche, wobei die Brotstangen (3) getragen werden durch einander entgegengesetzte Schubaktionen, die übereinstimmend mit dem Greifende (3a) jeder Brotstange (3) ausgeübt werden.

5. Verfahren nach einem oder mehreren der vorhergehenden Ansprüche, wobei ein Luftstrahl gegen genannte Brotstangen (3) ausgerichtet ist, um einen Überschuss der essbaren Substanz im flüssigen Zustand vor Erreichung des genannten Erstarrungsschritts zu entfernen.

6. Vorrichtung zur kontinuierlichen Herstellung von teilweise mit einem essbaren Überzug beschichteten Brotstangen, umfassend:
Auftragungseinrichtungen (19) längs der Beschickungsbahn ("A") arbeitend, zum Abgeben einer essbaren Substanz in einem flüssigen Zustand auf genannte Brotstangen (3);
**dadurch gekennzeichnet, dass** sie außerdem umfasst:
einen linearen Förderer (9) geeignet zum Aufnehmen und Tragen genannter Brotstangen (3) in freitragender Art und Weise an einem Greifende (3a) davon, in einer einander parallelen Seite-an-Seite-Beziehung entsprechend einer im Wesentlichen horizontalen und transversalen Richtung in Bezug auf eine Beschickungsbahn ("A");
wobei genannte Auftragungseinrichtungen (19) auf einer seitlich versetzten Position in Bezug auf den linearen Förderer (9) arbeiten, um genannte essbare Substanz im flüssigen Zustand auf einen Abschnitt jeder Brotstange (3) sich vom Greifende (3a) erstreckend zu streuen;
Einrichtungen zum Erstarren (32) der auf jede Brotstange (3) gestreuten essbaren Substanz.

7. Vorrichtung nach Anspruch 6, wobei die Auftragungseinrichtungen (19) einen über der Beschickungsbahn ("A") platzierten Spender (20) umfassen, so dass ein Vorhang (21) genannter essbaren Substanz im flüssigen Zustand gebildet wird, die durch Schwerkraft auf die längs der Beschickungsbahn ("A") übertragenen Brotstangen (3) fließt.

8. Vorrichtung nach Anspruch 7, wobei die Auftragungseinrichtungen (19) außerdem eine Sammeloberfläche (29) umfassen, die unter dem Spender (29) und unter den durch den linearen Förderer aufgenommenen Brotstangen (3) angeordnet ist, um eine Schicht (21a) einer vom Spender (20) kommenden essbaren Substanz im flüssigen Zustand zu bilden.

9. Vorrichtung nach einer oder mehreren der Ansprüche 6 bis 8, wobei der lineare Förderer (9) ein Paar einander entgegengesetzte Förderbänder (10) umfasst, ausgelegt mit einander in genäherten Beziehung parallel angeordneten Beschickungsästen (11), um genannte zwischen ihnen befindlichen Brotstangen (3) aufzunehmen.

10. Vorrichtung nach Anspruch 9, wobei die Förderbänder (10) mit elastisch nachgiebigem Material (15) beschichtet sind.

11. Vorrichtung nach Anspruch 8, wobei genannte Sammeloberfläche (29) mit einem Abstand kleiner als 20 mm unter den durch den linearen Förderer (9) aufgenommenen Brotstangen (3) angeordnet ist.

12. Vorrichtung nach einer oder mehreren der Ansprüche 6 bis 8, wobei der lineare Förderer (9) ein Paar einander entgegengesetzte Förderbänder (10) umfasst, ausgelegt mit einander in genäherten Beziehung parallel angeordneten Beschickungsästen (11), um genannte zwischen ihnen befindlichen Brotstangen (3) in einer beeinflussenden Beziehung aufzunehmen.

## Revendications

1. Procédé destiné à la production continue de gressins partiellement recouverts d'une couche d'enrobage comestible, dans lequel lesdits gressins (3) sont supportés côte à côte de façon mutuellement parallèle suivant une orientation essentiellement horizontale et transversale par rapport à une trajectoire de déplacement (« A »), le long de laquelle se produisent les étapes suivantes : répandre une substance comestible à l'état fluide sur chaque gressin (3) ; solidifier la substance comestible répandue sur chaque gressin (3), **caractérisé en ce que** lesdits gressins sont supportés en porte-à-faux, chacun au niveau d'une extrémité de saisie (3a) de celui-ci ; et ladite substance comestible à l'état fluide est répandue sur une portion de chaque gressin (3) se développant depuis l'extrémité de saisie (3a).

2. Procédé selon la revendication 1, dans lequel l'étape de dispersion de la substance comestible comprend : disposer un rideau (21) de ladite substance comestible à l'état fluide, s'écoulant par gravité le long de la trajectoire de déplacement (« A ») des gressins (3) ; faire passer chaque gressin (3) à travers ledit rideau (21).

3. Procédé selon la revendication 2, comprenant également les étapes suivantes : acheminer ladite substance comestible à l'état fluide provenant dudit rideau (21) sur une surface d'accumulation (29) située en dessous par rapport aux gressins (3) se déplaçant le long de la trajectoire de déplacement (« A ») ; faire passer au moins une portion inférieure de chaque gressin (3) à travers une couche (21a) de ladite substance comestible à l'état fluide accumulée sur la surface d'accumulation (29).

4. Procédé selon une ou plusieurs des revendications précédentes, dans lequel les gressins (3) sont supportés par des actions de poussée mutuellement opposées appliquées au niveau de l'extrémité de saisie (3a) de chaque gressin (3).

5. Procédé selon une ou plusieurs des revendications précédentes, dans lequel un jet d'air est dirigé contre lesdits gressins (3) pour retirer un excès de substance comestible à l'état fluide avant de réaliser ladite étape de solidification.

6. Appareil destiné à la production continue de gressins partiellement recouverts d'une couche d'enrobage comestible, comprenant : des dispositifs d'application (19) fonctionnant le long d'une trajectoire de déplacement (« A ») pour fournir une substance comestible à l'état fluide sur lesdits gressins (3) ; **caractérisé en ce qu'**il comporte aussi :
un tapis rectiligne (9) pouvant prendre et supporter lesdits gressins (3) en porte-à-faux, chacun au niveau d'une extrémité de saisie (3a) de celui-ci, côte à côte de façon mutuellement parallèle suivant une orientation essentiellement horizontale et transversale par rapport à une trajectoire de déplacement (« A ») ; dans lequel lesdits dispositifs d'application (19) fonctionnent à une position latéralement décalée par rapport au tapis rectiligne (9), de sorte à répandre ladite substance comestible à l'état fluide sur une portion de chaque gressin (3) se développant depuis l'extrémité de saisie (3a) ; des dispositifs pour solidifier (32) la substance comestible répandue sur chaque gressin (3).

7. Appareil selon la revendication 6, dans lequel les dispositifs d'application (19) comprennent un distributeur (20) placé au-dessus de la trajectoire de déplacement (« A ») pour former un rideau (21) de ladite substance comestible à l'état fluide, s'écoulant par gravité sur les gressins (3) se déplaçant le long de la trajectoire de déplacement (« A »).

8. Appareil selon la revendication 7, dans lequel les dispositifs d'application (19) comprennent également une surface d'accumulation (29) disposée sous le distributeur (20) et en dessous des gressins (3) pris par le tapis rectiligne (9), pour former une couche (21a) d'une substance comestible à l'état fluide provenant du distributeur (20).

9. Appareil selon une ou plusieurs des revendications 6 à 8, dans lequel le tapis rectiligne (9) comprend une paire de tapis transporteurs mutuellement opposés (10), ayant des sections d'acheminement (11) disposées parallèlement dans une relation d'approche mutuelle pour prendre lesdits gressins (3) interposés entre eux.

10. Appareil selon la revendication 9, dans lequel les tapis transporteurs (10) sont recouverts d'un matériau déformable élastiquement (15).

11. Appareil selon la revendication 8, dans lequel ladite surface d'accumulation (29) est disposée à une distance inférieure à 20 mm en dessous des gressins (3) pris par le tapis rectiligne (9).

12. Appareil selon une ou plusieurs des revendications 6 à 8, dans lequel le tapis rectiligne (9) comprend une paire de tapis transporteurs mutuellement opposés (10), ayant des sections d'acheminement (11) disposées parallèlement dans une relation d'approche mutuelle pour prendre en biais lesdits gressins (3) interposés entre eux.
